# EUROPEAN PATENT SPECIFICATION

(11) **EP 4 566 926 B1**
(45) Date of publication and mention of the grant of the patent: **18.11.2026**
(21) Application number: 24209219.5
(22) Date of filing: 28.10.2024
(51) Int. Cl.: B62J 6/026, B60Q 1/28, F21S 41/20

(54) **STRADDLED VEHICLE POSITION LIGHT**
POSITIONSLEUCHTE FÜR GRÄTSCHSITZFAHRZEUG
FEU DE POSITION DU VÉHICULE À SELLE

(30) Priority: 08.12.2023 JP 2023207377
(43) Date of publication of application: 11.06.2025
(73) Proprietor: Yamaha Hatsudoki Kabushiki Kaisha, Iwata-shi, Shizuoka 438-8501 (JP)
(72) Inventor: OHTA, Mitsuaki, Iwata-shi, 4388501 (JP); SAKATA, Kohei, Iwata-shi, 4388501 (JP)
(74) Representative: Studio Torta S.p.A.

(56) References cited:
- EP-A2- 3 067 235
- CN-Y- 201 382 348
- JP-A- 2017 019 408
- JP-A- 2021 030 797

## Description

### Technical field

The present invention relates to a straddled vehicle.

### BACKGROUND

The straddled vehicle includes a light unit. The light unit includes a position lamp (for example, JP 2013-112295A). The position lamp includes a reflector, a light source, and a clear lens. The light source is, for example, an LED. The reflector reflects light from the light source. The clear lens transmits the light from the light source and the reflector.

In the above-mentioned straddled vehicle, the shape of the light emitted by the position lamp is determined by the shape of the reflector. Therefore, in order to change the shape of the light emitted by the position lamp, it is necessary to change the shape of the reflector. Since changing the shape of the reflector affects the shape or arrangement of other parts of the light unit, in order to change the shape of the light emitted by the position lamp, it is necessary to change the whole design of the light unit. Therefore, it is not easy to change the shape of the light from the position lamp. An object of the present invention is to provide a straddled vehicle in which the shape of the light from the position lamp can be easily changed.

CN-Y-201382348, EP-A-3067235, JP-A-2021030797 and JP-A-2017019408 disclose a straddled unit having some of the characteristics of claim 1.

### Description of the invention

A straddled vehicle according to one aspect of the present invention includes a vehicle body and a light unit. The light unit includes a position lamp and is attached to the vehicle body. The light unit includes a housing, a light source, and a light blocking member. The housing includes an internal space. The light source irradiates light so that the internal space is filled with the light. The light blocking member is attached to the housing and closes the internal space. The light blocking member includes a window that transmits the light filling the internal space. The shape of the light emitted by the position lamp is determined by the shape of the window.

In the straddled vehicle according to the present aspect, the shape of the light from the position lamps is determined by the shape of the window of the light blocking member attached to the housing. Therefore, by changing the shape of the window of the light blocking member, the shape of the light emitted by the position lamps can be easily changed. For example, when manufacturing a straddled vehicle, a number of types of light blocking members with different window shapes can be prepared, and the shape of the light from the position lamps can be easily changed by selecting one of them. Alternatively, even after the manufacture of the straddled vehicle, the shape of the light from the position lamps can be easily changed by replacing the light blocking member attached to the straddled vehicle with another type of light blocking member having a window with a different shape.

The light blocking member may include an inner lens attached to the window. In this case, the light blocking member is protected by the inner lens. The light unit may further include an outer lens that covers the light blocking member. In this case, the light blocking member is protected by the outer lens.

The window may have a shape that extends upward and laterally outward. The window may have a shape that curves downward.

The window may include a first linear shape and a second linear shape. The second linear shape may be disposed apart from the first linear shape. The second linear shape may be connected to the first linear shape at an end of the first linear shape. The second linear shape may be disposed below the first linear shape.

The window may include a first linear shape, a second linear shape, and a third linear shape. The second linear shape may be disposed apart from the first linear shape. The third linear shape may be disposed apart from the second linear shape. The second linear shape may be disposed below the first linear shape. The third linear shape may be disposed below the second linear shape. The second linear shape may be disposed laterally outward of the first linear shape. The third linear shape may be disposed laterally outward of the second linear shape.

In the straddled vehicle according to the present aspect, the shape of the light from the position lamps can be easily changed by selectively attaching a light blocking member having a different window shape as described above to the straddled vehicle during or after the manufacture of the straddled vehicle. Furthermore, a plurality of linear lights of each of the position lamps can be formed by light from a common light source. This reduces the number of light sources, thereby enabling the light unit to be made smaller.

### Brief description of the drawings

FIG. 1 is a side view of a straddled vehicle according to an embodiment.
FIG. 2 is a front view of the straddled vehicle.
FIG. 3 is a perspective view of a light unit.
FIG. 4 is a perspective view of the light unit with an outer lens omitted.
FIG. 5 is a front view of the light unit with the outer lens omitted.
FIG. 6 is a front view of the light unit with a light blocking member removed.
FIG. 7 is a front view of the light blocking member according to a first example.
FIG. 8 is a cross-sectional view taken along line **VIII-VIII** in FIG. 5.
FIG. 9 is a front view of the straddled vehicle to which the light blocking member according to the first example is attached and in which the headlight and the left and right position lamps are turned on.
FIG. 10 is a front view of a light blocking member according to a second example.
FIG. 11 is a front view of a straddled vehicle to which the light blocking member according to the second example is attached and in which the headlight and the left and right position lamps are turned on.
FIG. 12 is a front view of a light blocking member according to a third example.
FIG. 13 is a front view of a straddled vehicle to which the light blocking member according to the third example is attached and in which the headlight and the left and right position lamps are turned on.
FIG. 14 is a front view of a light blocking member according to a fourth example.
FIG. 15 is a front view of a straddled vehicle to which the light blocking member according to the fourth example is attached and in which the headlight and the left and right position lamps are turned on.
FIG. 16 is a front view of a light blocking member according to a fifth example.
FIG. 17 is a front view of a straddled vehicle to which the light blocking member according to the fifth example is attached and in which the headlight and the left and right position lamps are turned on.
FIG. 18 is a cross-sectional view of a light unit according to a first modified example.
FIG. 19 is a schematic diagram of a part of the light unit according to the first modified example.
FIG. 20 is a cross-sectional view of a light unit according to a second modified example.
FIG. 21 is a schematic diagram of a part of the light unit according to the second modified example.

### Embodiments of the invention

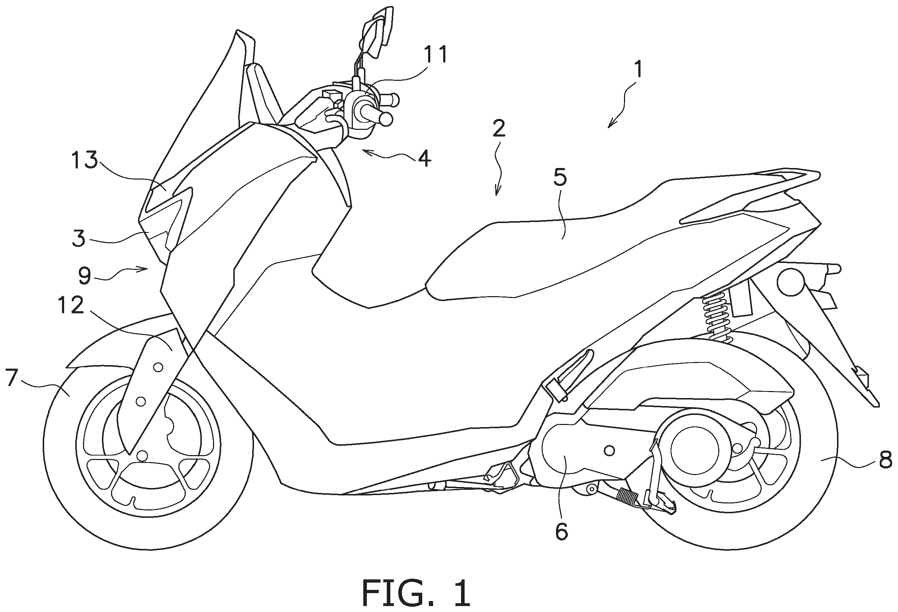

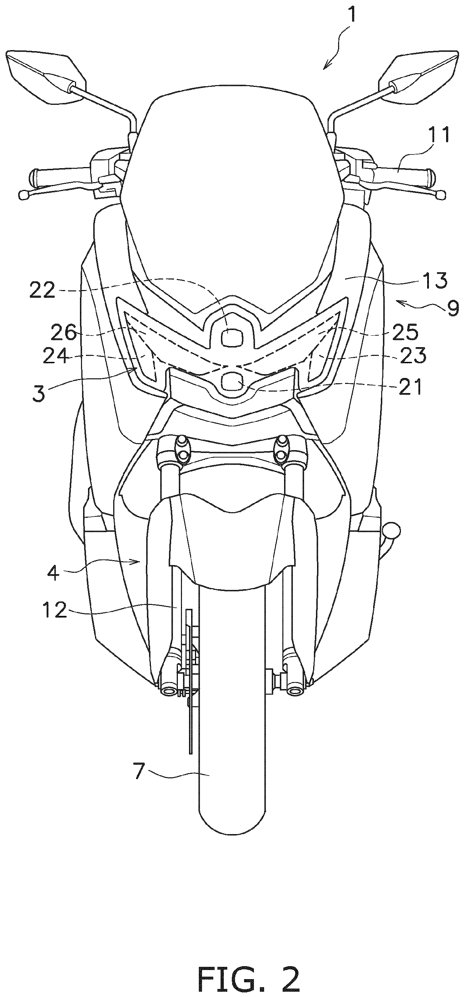

A straddled vehicle according to an embodiment will now be described with reference to the drawings. FIG. 1 is a side view of a straddled vehicle 1 according to an embodiment. FIG. 2 is a front view of the straddled vehicle 1. In the present embodiment, the straddled vehicle 1 is a scooter. As shown in FIGS. 1 and 2, a straddled vehicle 1 includes a vehicle body 2 and a light unit 3. The vehicle body 2 includes a steering device 4, a seat 5, a power unit 6, a front wheel 7, a rear wheel 8, and a vehicle body cover 9. In the following description, the left and right directions refer to the left and right directions as seen by a rider seated on the seat 5.

The steering device 4 includes a handlebar 11 and a front fork 12. The handlebar 11 is connected to the front fork 12. The handlebar 11 is operable to the left and right by the rider. The front fork 12 rotatably supports the front wheel 7. The seat 5 is disposed behind the steering device 4. The power unit 6 is disposed below the seat 5. The power unit 6 includes, for example, an internal combustion engine and a transmission. Alternatively, the power unit 6 may include an electric motor. The rear wheel 8 is rotatably supported by the power unit 6. Alternatively, the rear wheel 8 may be rotatably supported by a swing arm.

The vehicle body cover 9 includes a front cover 13. The front cover 13 is disposed in front of the steering device 4. The light unit 3 is attached to the vehicle body 2. In detail, the light unit 3 is attached to the front cover 13. The light unit 3 includes headlights 21 and 22, flashers 23 and 24, and position lamps 25 and 26. The headlights 21 and 22, the flashers 23 and 24, and the position lamps 25 and 26 are integrated in the light unit 3.

The headlights 21 and 22 include a first headlight 21 and a second headlight 22. The first headlight 21 and the second headlight 22 are arranged side by side in the vertical direction. For example, the first headlight 21 is a high beam light and the second headlight 22 is a low beam light. Alternatively, the first headlight 21 may be a low beam light and the second headlight 22 may be a high beam light.

The flashers 23 and 24 include a left flasher 23 and a right flasher 24. The left flasher 23 is disposed leftward of the headlights 21 and 22. The right flasher 24 is disposed rightward of the headlights 21 and 22. The left flasher 23 and the right flasher 24 each extend in the vertical direction.

The position lamps 25 and 26 include a left position lamp 25 and a right position lamp 26. The left position lamp 25 is disposed leftward of the headlights 21 and 22. The left position lamp 25 is disposed between the headlights 21 and 22 and the left flasher 23. The right position lamp 26 is disposed rightward of the headlights 21 and 22. The right position lamp 26 is disposed between the headlights 21 and 22 and the right flasher 24. The left position lamp 25 and the right position lamp 26 each have a shape that extends upward and laterally outward.

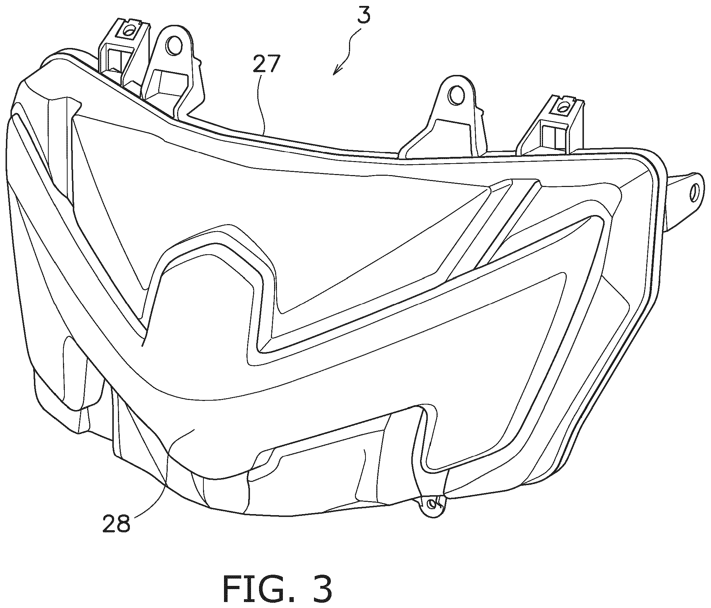

FIG. 3 is a perspective view of the light unit 3. As shown in FIG. 3, the light unit 3 includes a housing 27 and an outer lens 28. The outer lens 28 is made of a transparent material. The outer lens 28 may be colored. The outer lens 28 is attached to the housing 27. The outer lens 28 covers the housing 27 from the front.

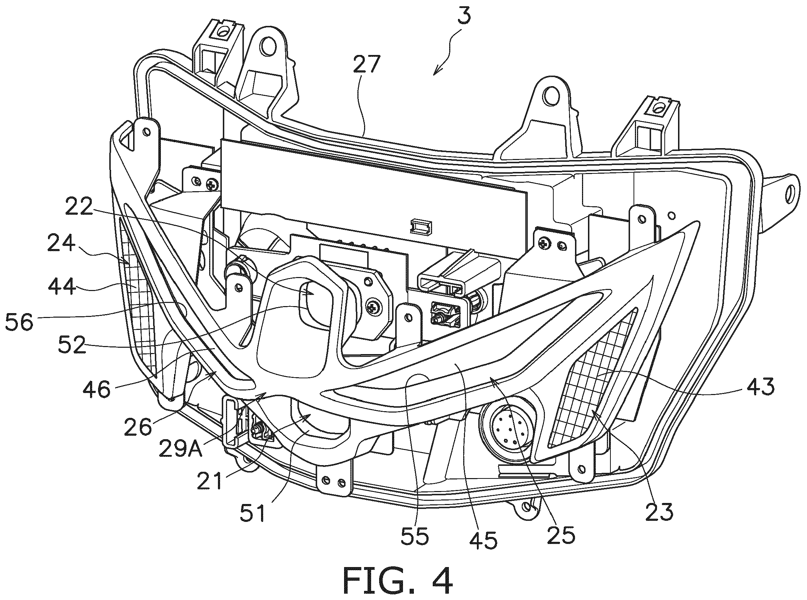

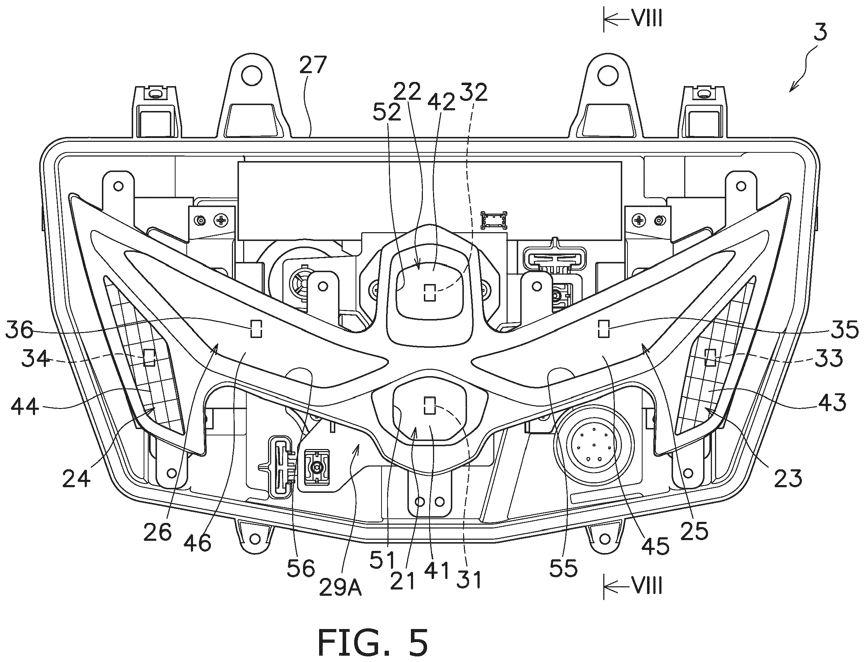

FIG. 4 is a perspective view of the light unit 3 with the outer lens 28 omitted. FIG. 5 is a front view of the light unit 3 with the outer lens 28 omitted. As shown in FIGS. 4 and 5, the light unit 3 includes a light blocking member 29A. The light blocking member 29A has a light blocking property. For example, the light blocking member 29A is made of a material such as resin having a light blocking property. Alternatively, the light blocking member 29A may be coated with a light blocking paint. The light blocking member 29A is a separated body from the housing 27. The light blocking member 29A is disposed in front of the housing 27. The light blocking member 29A is attached to the housing 27. The outer lens 28 described above covers the light blocking member 29A from the front.

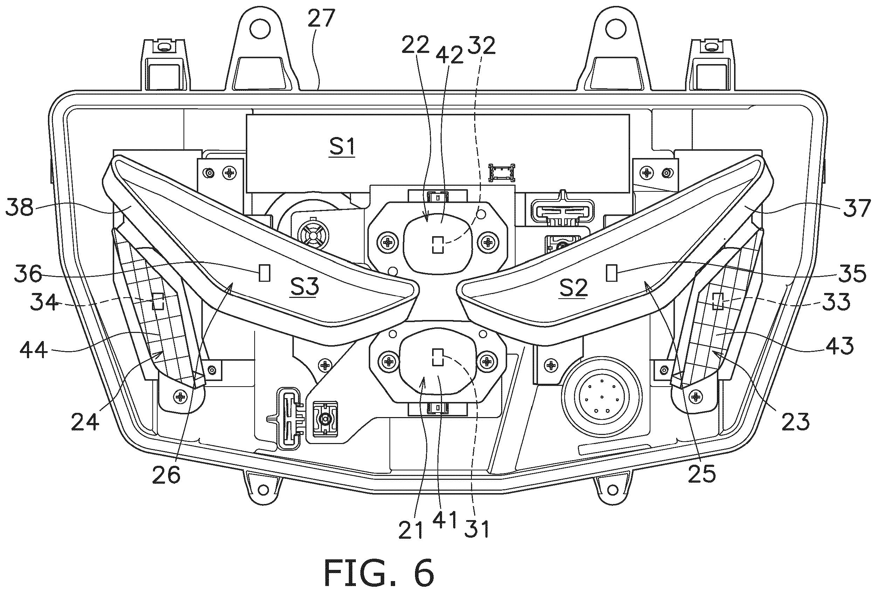

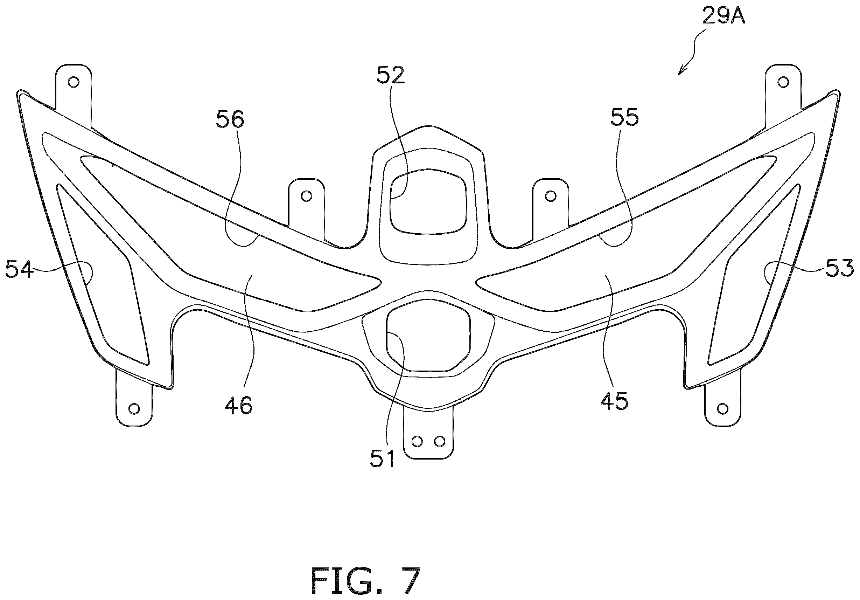

FIG. 6 is a front view of the light unit 3 with the light blocking member 29A removed. FIG. 7 is a front view of the light blocking member 29A. As shown in FIGS. 5 and 6, the light unit 3 includes light sources 31 and 32 for the headlights 21 and 22, light sources 33 and 34 for the flashers 23 and 24, and light sources 35 and 36 for the position lamps 25 and 26. The light sources 31 and 32 for the headlights 21 and 22, the light sources 33 and 34 for the flashers 23 and 24, and the light sources 35 and 36 for the position lamps 25 and 26 are, for example, LEDs. Alternatively, the light sources 31 and 32 for the headlights 21 and 22, the light sources 33 and 34 for the flashers 23 and 24, and the light sources 35 and 36 for the position lamps 25 and 26 may be bulbs.

The number of light sources for the headlights 21 and 22 is not limited to one each, and may be multiple. The number of light sources for the flashers 23 and 24 is not limited to one each, and may be multiple. The number of light sources for the position lamps 25 and 26 is not limited to one each, and may be multiple.

The light unit 3 includes inner lenses 41 and 42 for the headlights 21 and 22 and inner lenses 43 and 44 for the flashers 23 and 24. The inner lenses 41 and 42 for the headlights 21 and 22 and the inner lenses 43 and 44 for the flashers 23 and 24 are attached to the housing 27.

The inner lens 41 for the first headlight 21 is disposed in front of the light source 31 for the first headlight 21. The inner lens 41 transmits light from the light source 31. The inner lens 42 for the second headlight 22 is disposed in front of the light source 32 for the second headlight 22. The inner lens 42 transmits light from the light source 32.

The inner lens 43 for the left flasher 23 is disposed in front of the light source 33 for the left flasher 23. The inner lens 43 transmits light from the light source 33. The inner lens 44 for the right flasher 24 is disposed in front of the light source 34 for the right flasher 24. The inner lens 44 transmit the light from the light sources 34.

As shown in FIG. 6, the housing 27 includes a main internal space S1, a left internal space S2, and a right internal space S3. The light sources 31 and 32 of the headlights 21 and 22 and the light sources 33 and 34 of the flashers 23 and 24 are arranged in the main internal space S1. The light source 35 for the left position lamp 25 (hereinafter referred to as the left light source) is disposed in the left internal space S2. The light source 36 for the right position lamp 26 (hereinafter referred to as the right light source) is disposed in the right internal space S3.

The light unit 3 includes a left partition member 37 and a right partition member 38. The left partition member 37 and the right partition member 38 protrude forward from the housing 27. The left partition member 37 and the right partition member 38 may be separated bodies from the housing 27. Alternatively, the left partition member 37 and the right partition member 38 may be integral with the housing 27. The left partition member 37 partitions the left internal space S2 from the main internal space S1. The left partition member 37 is disposed so as to surround the periphery of the left internal space S2. The right partition member 38 partitions the right internal space S3 from the main internal space S1. The right partition member 38 is disposed so as to surround the periphery of the right internal space S3.

The left partition member 37 and the right partition member 38 are each open toward the front. The light blocking member 29A is disposed in front of the left partition member 37 and the right partition member 38. The light blocking member 29A closes the left partition member 37 and the right partition member 38 from the front. As a result, the light blocking member 29A closes the left internal space S2 and the right internal space S3.

As shown in FIG. 7, the light blocking member 29A includes openings 51 and 52 for the headlights 21 and 22 and openings 53 and 54 for the flashers 23 and 24. The openings 51 and 52 for the headlights 21 and 22 include a first opening 51 and a second opening 52. The first opening 51 and the second opening 52 are arranged side by side in the vertical direction. The first opening 51 is disposed in front of the light source 31 for the first headlight 21. The second opening 52 is disposed in front of the light source 32 for the second headlight 22.

The openings 53 and 54 for the flashers 23 and 24 include a left opening 53 and a right opening 54. The left opening 53 is disposed leftward of the first opening 51 and the second opening 52. The left opening 53 is disposed in front of the light source 33 for the left flasher 23. The right opening 54 is disposed rightward of the first opening 51 and the second opening 52. The right opening 54 is disposed in front of the light source 34 for the right flasher 24.

The light blocking member 29A includes a left window 55 and a right window 56. The left window 55 and the right window 56 are openings provided in the light blocking member 29A. The left window 55 is disposed in front of the left internal space S2. The left window 55 is disposed between the left opening 53 and the openings 51 and 52 for the headlights 21 and 22. The right window 56 is disposed in front of the right internal space S3. The right window 56 is disposed between the right opening 54 and the openings 51 and 52 for the headlights 21 and 22. A left inner lens 45 is attached to the left window 55. A right inner lens 46 is attached to the right window 56. The left inner lens 45 and the right inner lens 46 each transmit light.

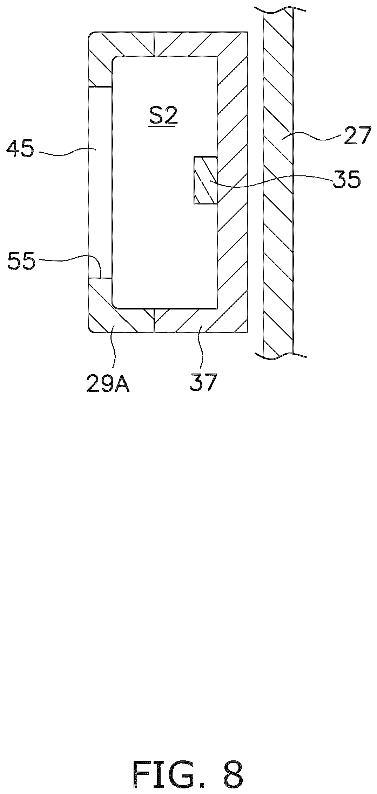

FIG. 8 is a cross-sectional view taken along line VIII-VIII in FIG. 5. As shown in FIG. 8, the left light source 35 is disposed in the left internal space S2. The left light source 35 irradiates light so that the left internal space S2 is filled with the light. The left window 55 transmits the light filling the left internal space S2. Similarly, the right light source 36 is disposed in the right internal space S3. The right light source 36 emits light so that the right internal space S3 is filled with the light. The right window 56 transmits the light filling the right internal space S3. A light diffusing material or a light guiding material may be disposed in each of the left internal space S2 and the right internal space S3.

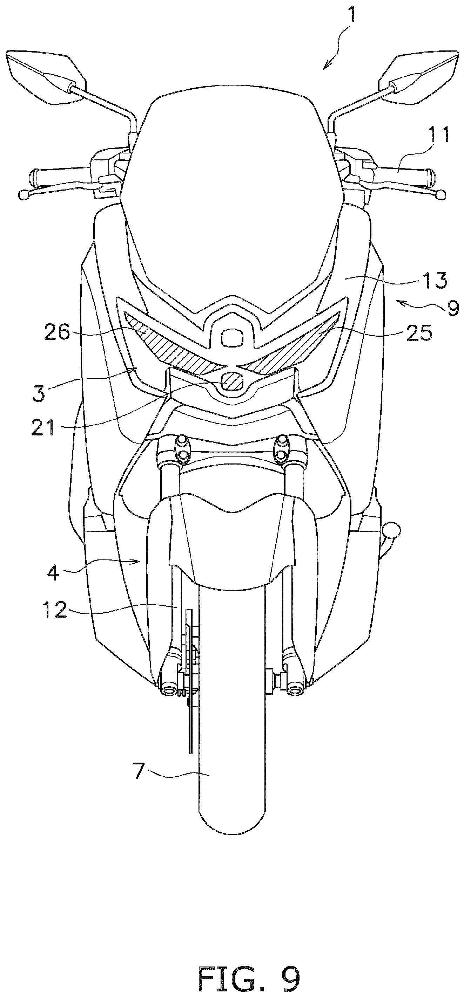

The left window 55 and the right window 56 each have a shape that extends upward and laterally outward. The shapes of the light from the left position lamp 25 and the right position lamp 26 are determined by the shapes of the left window 55 and the right window 56. FIG. 9 is a front view of the straddled vehicle 1 with the headlight 21 and the left and right position lamps 25 and 26 turned on. In FIG. 9 and the subsequent drawings, the light of the headlight 21 and the light of the left and right position lamps 25 and 26 are represented by hatching.

As shown in FIG. 9, the shape of the light from the left position lamp 25 and the right position lamp 26 is determined by the shapes of the left window 55 and the right window 56 of the light blocking member 29A described above. The shape of the left window 55 of the light blocking member 29A forms a shape of the light that extends upward and laterally outward from the left position lamp 25. The shape of the right window 56 of the light blocking member 29A forms a shape of the light that extends upward and laterally outward from the right position lamp 26.

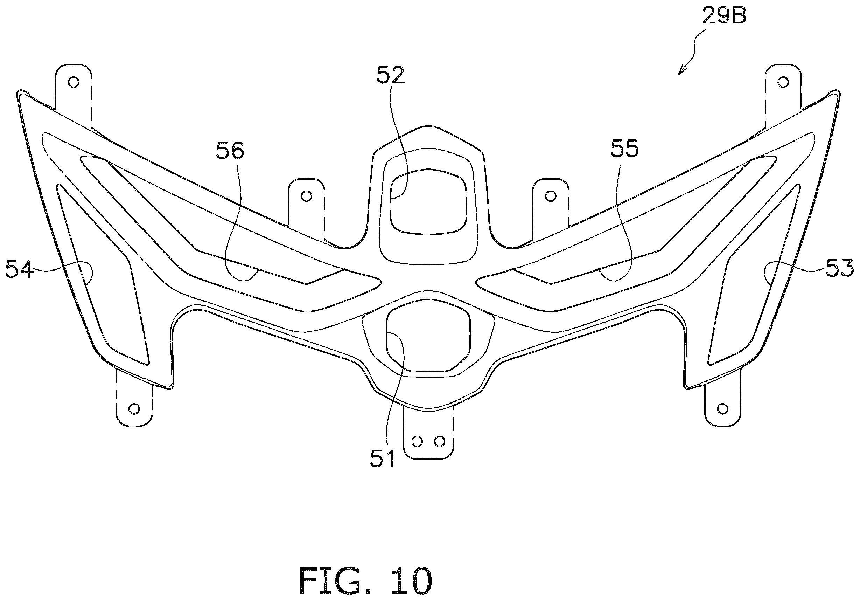

The light blocking member 29A described above is a first example of the light blocking member 29A according to the present embodiment. FIG. 10 is a front view of a light blocking member 29B according to a second example. As shown in FIG. 10, in the light blocking member 29B according to the second example, the left window 55 has a shape that is curved downward. The right window 56 has a shape symmetrical to the left window 55.

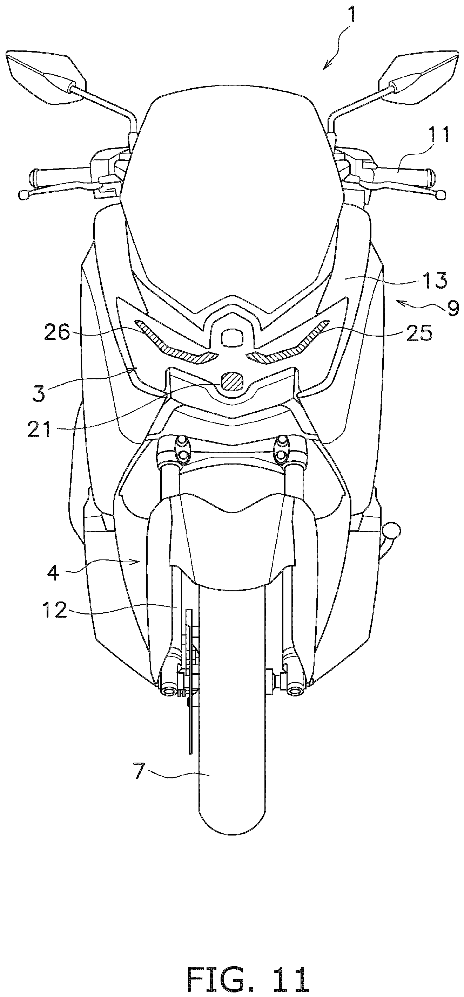

FIG. 11 is a front view of a straddled vehicle 1 to which the light blocking member 29B according to the second example is attached. As shown in FIG. 11, the shapes of the light emitted by the left position lamp 25 and the right position lamp 26 are determined by the shapes of the left window 55 and the right window 56 of the light blocking member 29B according to the second example described above. The shape of the left window 55 of the light blocking member 29B forms a shape of the light that is curved downward from the left position lamp 25. The shape of the right window 56 of the light blocking member 29B forms a shape of the light that is curved downward from the right position lamp 26.

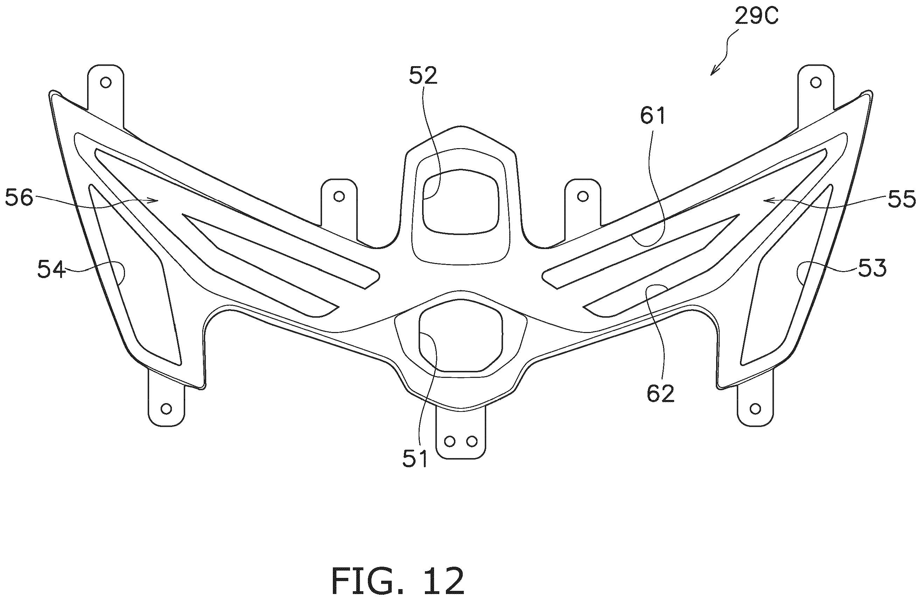

FIG. 12 is a front view of a light blocking member 29C according to a third example. As shown in FIG. 12, in the light blocking member 29C according to the third example, the left window 55 includes a first linear shape 61 and a second linear shape 62 that is disposed away from the first linear shape 61. The first linear shape 61 extends upward and laterally outward. The second linear shape 62 is disposed below the first linear shape 61. The second linear shape 62 extends upward and laterally outward. The second linear shape 62 is connected to the first linear shape 61 at the outer end of the first linear shape 61. The right window 56 has a shape symmetrical to the left window 55.

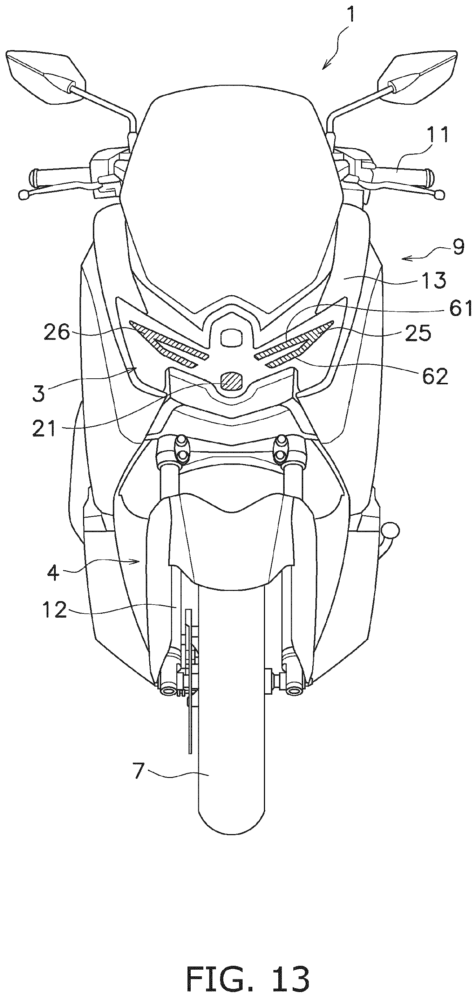

FIG. 13 is a front view of a straddled vehicle 1 to which the light blocking member 29C according to the third example is attached. As shown in FIG. 13, the shapes of the light from the left position lamp 25 and the right position lamp 26 are determined by the shapes of the left window 55 and the right window 56 of the light blocking member 29C according to the third example described above. The shape of the light of the left position lamp 25 is formed by the first linear shape 61 and the second linear shape 62 depending on the shape of the left window 55 of the light blocking member 29C. The shape of the light from the right position lamp 26 is formed to be symmetrical to the first linear shape 61 and the second linear shape 62 due to the shape of the right window 56 of the light blocking member 29C.

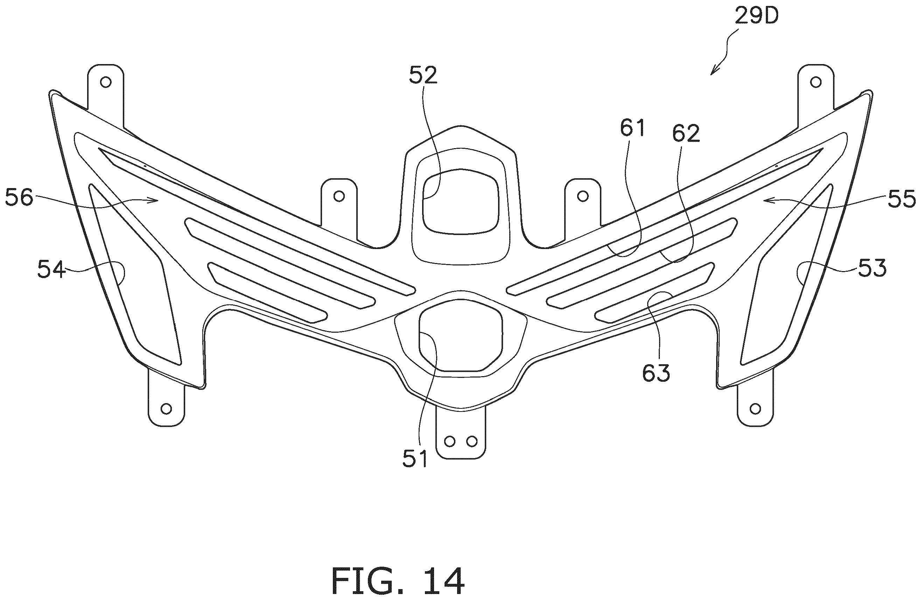

FIG. 14 is a front view of a light blocking member 29D according to a fourth example. As shown in FIG. 14, in the light blocking member 29D according to the fourth example, the left window 55 includes a first linear shape 61, a second linear shape 62, and a third linear shape 63. The first linear shape 61 extends upward and laterally outward. The second linear shape 62 is disposed apart from the first linear shape 61. The second linear shape 62 is disposed below the first linear shape 61. The second linear shape 62 extends upward and laterally outward. The third linear shape 63 is disposed apart from the second linear shape 62. The third linear shape 63 is disposed below the second linear shape 62. The third linear shape 63 extends upward and laterally outward. The right window 56 has a shape symmetrical to the left window 55.

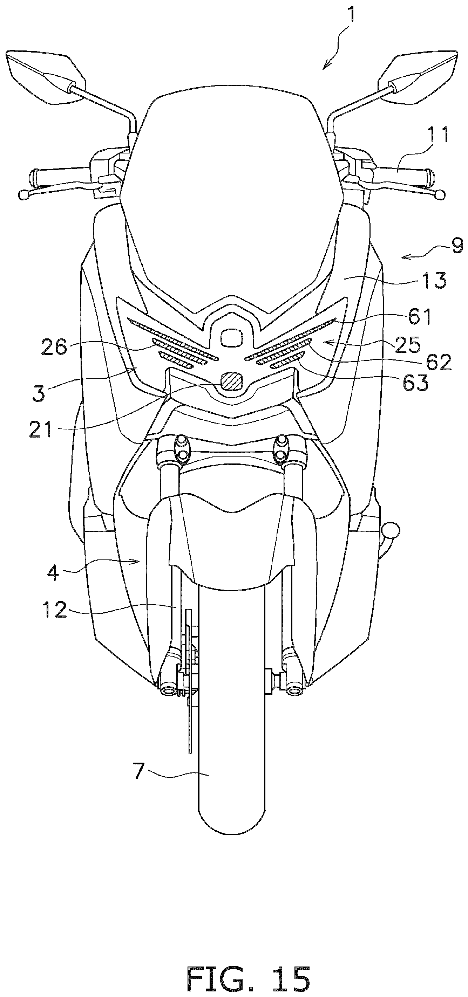

FIG. 15 is a front view of a straddled vehicle 1 to which a light blocking member 29D according to the fourth example is attached. As shown in FIG. 15, the shapes of the light from the left position lamp 25 and the right position lamp 26 are determined by the shapes of the left window 55 and the right window 56 of the light blocking member 29D according to the fourth example described above. The shape of the light from the left position lamp 25 is formed by the first to third linear shapes 61 to 63 that are disposed apart from one another in the vertical direction, depending on the shape of the left window 55 of the light blocking member 29D according to the fourth example. The shape of the light from the right position lamp 26 that is symmetrical to the first to third linear shapes 61 to 63 is formed by the shape of the right window 56 of the light blocking member 29D according to the fourth example.

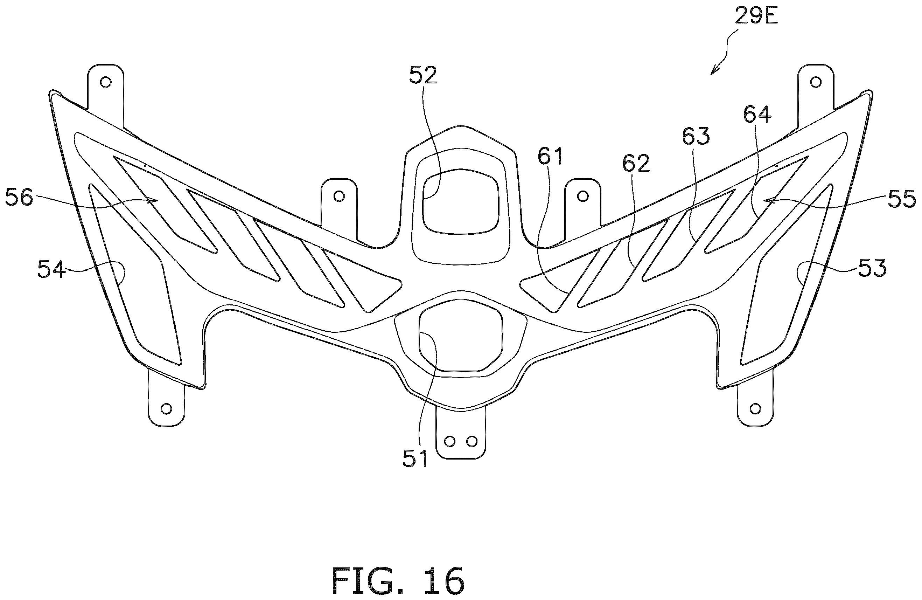

FIG. 16 is a front view of a light blocking member 29E according to a fifth example. As shown in FIG. 16, in the light blocking member 29E according to the fifth example, the left window 55 includes a first linear shape 61, a second linear shape 62, a third linear shape 63, and a fourth linear shape 64. The first linear shape 61 extends upward and laterally outward. The second linear shape 62 is disposed apart from the first linear shape 61. The second linear shape 62 is disposed laterally outward of the first linear shape 61. The second linear shape 62 extends upward and laterally outward. The third linear shape 63 is disposed away from the second linear shape 62. The third linear shape 63 is disposed laterally outward of the second linear shape 62. The third linear shape 63 extends upward and laterally outward. The fourth linear shape 64 is disposed away from the third linear shape 63. The fourth linear shape 64 is disposed laterally outward of the third linear shape 63. The fourth linear shape 64 extends upward and laterally outward. The right window 56 has a shape symmetrical to the left window 55.

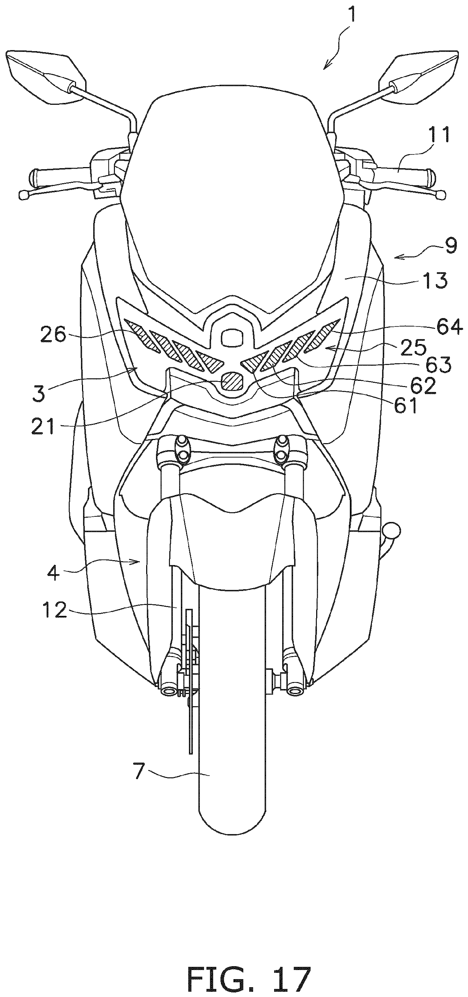

FIG. 17 is a front view of a straddled vehicle 1 to which the light blocking member 29E according to the fifth example is attached. As shown in FIG. 17, the shapes of the light from the left position lamp 25 and the right position lamp 26 are determined by the shapes of the left window 55 and the right window 56 of the light blocking member 29E according to the fifth example described above. The shape of the light from the left position lamp 25 is formed by the first to fourth linear shapes 61 to 64 that are arranged apart from one another in the left-right direction, depending on the shape of the left window 55 of the light blocking member 29E according to the fifth example. Due to the shape of the right window 56 of the light blocking member 29E according to the fifth example, the shape of the light of the right position lamp 26 is formed to be symmetrical with respect to the first to fourth linear shapes 61 to 64 that are arranged apart from each other in the left-right direction.

In the straddled vehicle 1 according to the present embodiment described above, the shape of the light emitted by the position lamps 25 and 26 is determined by the shape of the windows 55 and 56 of the light blocking member 29A attached to the housing 27. Therefore, by changing the shape of the windows 55 to 56 of the light blocking member 29A, the shape of the light emitted by the position lamps 25 and 26 can be easily changed.

For example, when manufacturing the straddled vehicle 1, the above-mentioned multiple types of light blocking members 29A to 29E are prepared, and the shape of the light of the position lamps 25 and 26 can be easily changed by selecting one of them. Alternatively, even after the manufacture of the straddled vehicle 1, the shape of the light emitted by the position lamps 25 and 26 can be easily changed by replacing the light blocking member 29A attached to the straddled vehicle 1 with other types of light blocking members 29B to 29E having windows 55 and 56 with different shapes.

Although one embodiment of the present invention has been described above, the present invention is not limited to the above embodiment, and various modifications are possible without departing from the gist of the invention.

The straddled vehicle 1 is not limited to a scooter, but may be other types of vehicles such as a sports type, a street type, an off-road type, or a moped. The light unit 3 described above is provided on the front cover 13. However, the light unit 3 may be provided at the rear of the straddled vehicle 1.

The structure of the light unit 3 is not limited to that in the above embodiment and may be modified. For example, the arrangement or shape of the headlight 21 may be changed. The arrangement or shape of the flashers 23 and 24 may be changed. The arrangement or shape of the position lamps 25 and 26 may be changed. The shape of the windows 55 and 56 of the light blocking member is not limited to that in the above embodiment and may be changed.

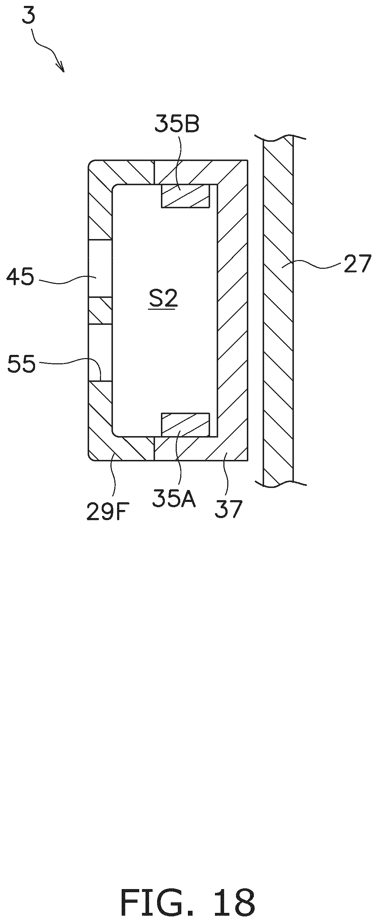

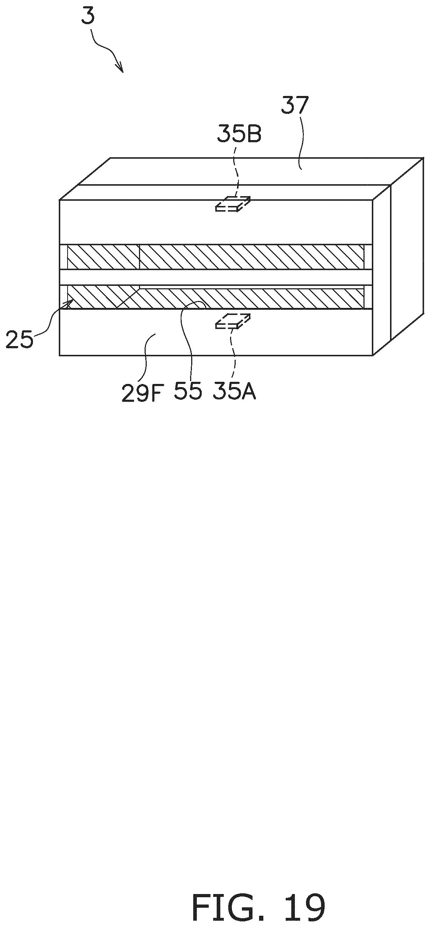

FIG. 18 is a cross-sectional view of a light unit 3 according to a first modified example. FIG. 19 is a schematic diagram of a part of the light unit 3 according to the first modified example. As shown in FIGS. 18 and 19, a left light source 35A may be disposed on the lower surface of the left partition member 37. A left light source 35B may be disposed on the upper surface of the left partition member 37. In this case, even if the left light sources 35B and 35A overlap with the light blocking member 29F in the front-rear direction, the light reflected within the left partition member 37 leaks out through the left window 55, thereby forming the shape of the left position lamp 25 as shown in FIG. 19. Although not shown in the figure, the right position lamp 26 is similar to the left position lamp 25.

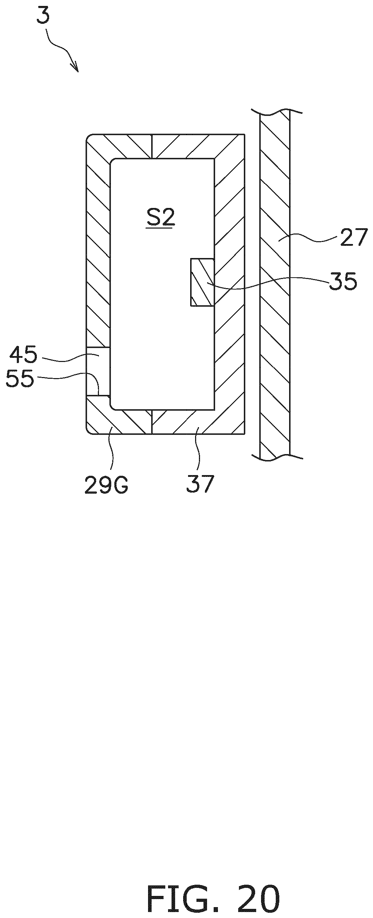

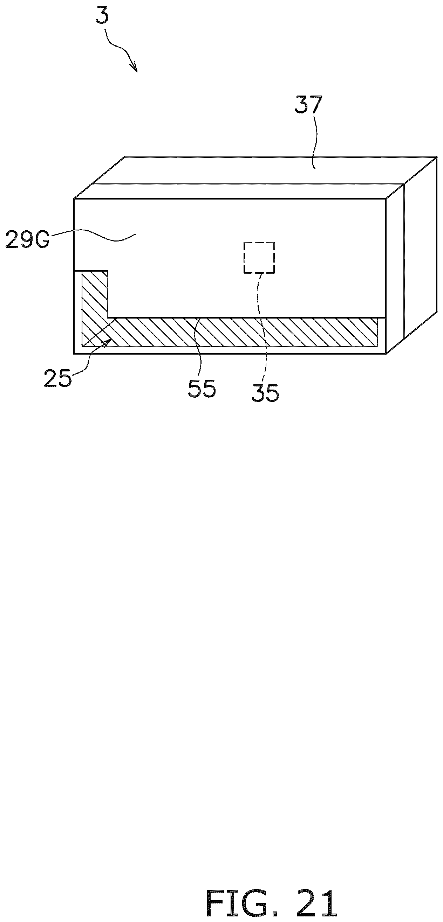

FIG. 20 is a cross-sectional view of a light unit 3 according to a second modified example. FIG. 21 is a schematic diagram of a part of the light unit 3 according to the second modified example. As shown in FIGS. 20 and 21, the left light source 35 may be disposed on the rear surface of the left partition member 37. The left light source 35 may be disposed at a position not facing the left window 55. The left light source 35 may be disposed at a position overlapping with the light blocking member 29G in the front-rear direction. In this case, even if the left light source 35 overlaps with the light blocking member 29G in the front-rear direction, the light reflected within the left partition member 37 leaks out through the left window 55, thereby forming the shape of the left position lamp 25 as shown in FIG. 21. Although not shown in the figure, the right position lamp 26 is similar to the left position lamp 25.

### REFERENCE SIGNS LIST

2: Vehicle body, 3: Light unit, 25: Left position lamp, 26: Right position lamp, 27: Housing, 28: Outer lens, 29A to 29G: Light blocking member, 35: Left light source, 36: Right light source, 45: Left inner lens, 46: Right inner lens, 55: Left window, 56: Right window, 61: First linear shape, 62: Second linear shape, 63: Third linear shape, S2: Left internal space, S3: Right internal space

## Claims

1. A straddled vehicle (1) comprising: a vehicle body (2); and a light unit (3) including left and right position lamp (25, 26), a headlight, and a flasher and attached to the vehicle body (2), wherein the light unit (3) includes a housing (27) including an internal space , and a light blocking member (29A, 29B, 29C, 29D, 29E) attached to the housing and closing the internal space (S2, S3), the light blocking member (29A, 29B, 29C, 29D, 29E) includes a window configured to transmit the light filling the internal space , and a shape of the light from the left and right position lamps are formed by a shape of the window (55, 56); said light blocking member (29A, 29B, 29C, 29D, 29E) has light blocking property; the light blocking member (29A, 29B, 29C, 29D, 29E) is a separated body from the housing (27); the internal space includes a left internal space (S2), a right internal space (S3), and a main internal space (S1) between the left internal space (S2) and the right internal space (S3); said light unit (3) including a left partition member (37) and a right partition member (38); said left partition member (37) and right partition member (38) protruding forward from the housing (27); the left partition member (37) partitioning the left internal space (S2) from the main internal space (S1); the left partition member (37) being disposed so as to surround the periphery of the left internal space (S2); the right partition member (38) partitioning the right internal space (S3) from the main internal space (S1); the right partition member (38) being disposed so as to surround the periphery of the right internal space (S3); the left partition member (37) and the right partition member (38) being each open toward the front; the light blocking member (29A, 29B, 29C, 29D, 29E) being disposed in front of the left partition member (37) and the right partition member (38); the light blocking member (29A) closing the left partition member (37) and the right partition member (38) from the front to close the left internal space (S2) and the right internal space (S3), wherein a light source (31, 32) of the headlight (21, 22) and a light source (33, 34) of the flasher (23, 24) are arranged in the main internal space (S1), a light source (35) for the left position lamp (25) is disposed in the left internal space (S2) and configured to irradiate light so that the left internal space (S2) is filled with the light, and a light source (36) for the right position lamp (26) is disposed in the right internal space (S3) and configured to irradiate light so that the right internal space (S3) is filled with the light.

2. The straddled vehicle according to claim 1, wherein the light blocking member (29A, 29B, 29C, 29D, 29E) includes an inner lens (41, 42, 43, 44, 45, 46) attached to the window (55, 56).

3. The straddled vehicle according to claim 2, wherein the light unit (3) further includes an outer lens (28) covering the light blocking member (29A).

4. The straddled vehicle according to any one of claims 1 to 3, wherein the window (55, 56) has a shape extending upward and laterally outward.

5. The straddled vehicle according to any one of claims 1 to 4, wherein the window (55, 56) has a shape curved downward.

## Patentansprüche

1. Spreizsitz-Fahrzeug (1), umfassend:
eine Fahrzeugkarosserie (2); und eine Leuchteneinheit (3), die eine linke und eine rechte Positionsleuchte (25, 26), einen Scheinwerfer und eine Blinkleuchte umfasst und an der Fahrzeugkarosserie (2) angebracht ist, wobei die Leuchteneinheit (3) ein Gehäuse (27) mit einem Innenraum und ein Lichtabschirmelement (29A, 29B, 29C, 29D, 29E) aufweist, das an dem Gehäuse angebracht ist und den Innenraum (S2, S3) verschließt, wobei das Lichtabschirmelement (29A, 29B, 29C, 29D, 29E) ein Fenster aufweist, das so ausgeführt ist, dass es das den Innenraum ausfüllende Licht durchlässt, und eine Form des Lichts von der linken und der rechten Positionsleuchte durch eine Form des Fensters (55, 56) gebildet wird; das Lichtabschirmelement (29A, 29B, 29C, 29D, 29E) eine Lichtabschirmeigenschaft aufweist; das Lichtabschirmelement (29A, 29B, 29C, 29D, 29E) ein vom Gehäuse (27) getrennter Körper ist; der Innenraum einen linken Innenraum (S2), einen rechten Innenraum (S3) sowie einen Hauptinnenraum (S1) zwischen dem linken Innenraum (S2) und dem rechten Innenraum (S3) einschließt; die Leuchteneinheit (3) ein linkes Trennelement (37) und ein rechtes Trennelement (38) umfasst; das linke Trennelement (37) und das rechte Trennelement (38) von dem Gehäuse (27) nach von vorstehen; das linke Trennelement (37) den linken Innenraum (S2) von dem Hauptinnenraum (S1) trennt; das linke Trennelement (37) so angeordnet ist, dass es den Umfang des linken Innenraums (S2) umgibt; das rechte Trennelement (38) den rechten Innenraum (S3) von dem Hauptinnenraum (S1) trennt; das rechte Trennelement (38) so angeordnet ist, dass es den Umfang des rechten Innenraums (S3) umgibt; das linke Trennelement (37) und das rechte Trennelement (38) jeweils nach vorn hin offen sind; das Lichtabschirmelement (29A, 29B, 29C, 29D, 29E) vor dem linken Trennelement (37) und dem rechten Trennelement (38) angeordnet ist; das Lichtabschirmelement (29A) das linke Trennelement (37) und das rechte Trennelement (38) von von der Vorderseite her verschließt, um den linken Innenraum (S2) und den rechten Innenraum (S3) abzuschließen, wobei eine Lichtquelle (31, 32) des Scheinwerfers (21, 22) und eine Lichtquelle (33, 34) der Blinkleuchte (23, 24) in dem Hauptinnenraum (S1) angeordnet sind, eine Lichtquelle (35) für die linke Positionsleuchte (25) in dem linken Innenraum (S2) angeordnet und so ausgeführt ist, dass sie Licht so ausstrahlt, dass der linke Innenraum (S2) mit dem Licht ausgeleuchtet wird, und eine Lichtquelle (36) für die rechte Positionsleuchte (26) in dem rechten Innenraum (S3) angeordnet und so ausgeführt ist, dass sie Licht so ausstrahlt, dass der rechte Innenraum (S3) mit dem Licht ausgeleuchtet wird.

2. Spreizsitz-Fahrzeug nach Anspruch 1, wobei das Lichtabschirmelement (29A, 29B, 29C, 29D, 29E) eine innere Linse (41, 42, 43, 44, 45, 46) aufweist, die an dem Fenster (55, 56) angebracht ist.

3. Spreizsitz-Fahrzeug nach Anspruch 2, wobei die Leuchteneinheit (3) des Weiteren eine äußere Linse (28) aufweist, die das Lichtabschirmelement (29A) abdeckt.

4. Spreizsitz-Fahrzeug nach einem der Ansprüche 1 bis 3, wobei das Fenster (55, 56) eine Form hat, die sich nach oben und seitlich nach außen erstreckt.

5. Spreizsitz-Fahrzeug nach einem der Ansprüche 1 bis 4, wobei das Fenster (55, 56) eine Form hat, die nach unten gekrümmt ist.

## Revendications

1. Véhicule à selle (1) comprenant : une carrosserie de véhicule (2) ; et une unité d'éclairage (3) comprenant des feux de position gauche et droit (25, 26), un phare et un clignotant, et fixée à la carrosserie de véhicule (2) , dans lequel l'unité d'éclairage (3) comprend un boîtier (27) comprenant un espace interne, et un élément de blocage de lumière (29A, 29B, 29C, 29D, 29E) fixé au boîtier et fermant l'espace interne (S2, S3), l'élément de blocage de lumière (29A, 29B, 29C, 29D, 29E) comprend une fenêtre configurée pour transmettre la lumière remplissant l'espace interne, et la forme de la lumière provenant des feux de position gauche et droit étant définie par la forme de la fenêtre (55, 56) ; ledit élément de blocage de lumière (29A, 29B, 29C, 29D, 29E) a une propriété de blocage de lumière ; l'élément de blocage de lumière (29A, 29B, 29C, 29D, 29E) est un corps distinct du boîtier (27) ; l'espace interne comprend un espace interne gauche (S2), un espace interne droit (S3) et un espace interne principal (S1) entre l'espace interne gauche (S2) et l'espace interne droit (S3) ; ladite unité d'éclairage (3) comprenant un élément de séparation gauche (37) et un élément de séparation droit (38) ; ledit élément de séparation gauche (37) et ledit élément de séparation droit (38) faisant saillie vers l'avant à partir du boîtier (27) ; l'élément de séparation gauche (37) séparant l'espace interne gauche (S2) de l'espace interne principal (S1) ; l'élément de séparation gauche (37) étant disposé de manière à entourer la périphérie de l'espace interne gauche (S2) ; l'élément de séparation droit (38) séparant l'espace interne droit (S3) de l'espace interne principal (S1) ; l'élément de séparation droit (38) étant disposé de manière à entourer la périphérie de l'espace interne droit (S3) ; l'élément de séparation gauche (37) et l'élément de séparation droit (38) étant chacun ouverts vers l'avant ; l'élément de blocage de lumière (29A, 29B, 29C, 29D, 29E) étant disposé devant l'élément de séparation gauche (37) et l'élément de séparation droit (38) ; l'élément de blocage de lumière (29A) fermant l'élément de séparation gauche (37) et l'élément de séparation droit (38) depuis l'avant afin de fermer l'espace interne gauche (S2) et l'espace interne droit (S3), dans lequel une source lumineuse (31, 32) du phare (21, 22) et une source lumineuse (33, 34) du clignotant (23, 24) sont agencées dans l'espace interne principal (S1), une source lumineuse (35) pour le feu de position gauche (25) est disposée dans l'espace interne gauche (S2) et configurée pour émettre de la lumière de manière à ce que l'espace interne gauche (S2) soit rempli de lumière, et une source lumineuse (36) pour le feu de position droit (26) est disposée dans l'espace interne droit (S3) et configurée pour émettre de la lumière de manière à ce que l'espace interne droit (S3) soit rempli de lumière.

2. Véhicule à selle selon la revendication 1, dans lequel l'élément de blocage de lumière (29A, 29B, 29C, 29D, 29E) comprend une lentille intérieure (41, 42, 43, 44, 45, 46) fixée à la fenêtre (55, 56).

3. Véhicule à selle selon la revendication 2, dans lequel l'unité d'éclairage (3) comprend en outre une lentille extérieure (28) couvrant l'élément de blocage de lumière (29A).

4. Véhicule à selle selon l'une quelconque des revendications 1 à 3, dans lequel la fenêtre (55, 56) présente une forme s'étendant vers le haut et latéralement vers l'extérieur.

5. Véhicule à selle selon l'une quelconque des revendications 1 à 4, dans lequel la fenêtre (55, 56) présente une forme incurvée vers le bas.
